(19) Europäisches Patentamt
European Patent Office
Office européen des brevets

(11) **EP 4 446 929 A1**

(12) **DEMANDE DE BREVET EUROPEEN**

(43) Date de publication:
**16.10.2024 Bulletin 2024/42**

(21) Numéro de dépôt: **24168802.7**

(22) Date de dépôt: **05.04.2024**

(51) Classification Internationale des Brevets (IPC):
**G06F 30/36** (2020.01)   **G06F 30/39** (2020.01)
**G06F 111/06** (2020.01)   **G06F 111/20** (2020.01)
**G06F 115/02** (2020.01)

(52) Classification Coopérative des Brevets (CPC):
**G06F 30/36; G06F 30/39;** G06F 2111/06;
G06F 2111/20; G06F 2115/02

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **06.04.2023 FR 2303453**

(71) Demandeur: **COMMISSARIAT À L'ÉNERGIE ATOMIQUE ET AUX ÉNERGIES ALTERNATIVES**
**75015 Paris (FR)**

(72) Inventeurs:
• ZAOURAR, Lilia
  **91191 Gif sur Yvette Cedex (FR)**
• PHILIPPE, Jean-Marc
  **91191 Gif sur Yvette Cedex (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ DE DÉTERMINATION D'ARCHITECTURES MATÉRIELLES DE CALCUL**

(57) Il est proposé un procédé de détermination d'une architecture matérielle d'un circuit intégré, comprenant une pluralité d'itérations d'étapes :
- appliquer (130) un algorithme d'optimisation à un espace d'exploration d'architecture pour déterminer au moins une configuration d'architecture candidate, ledit espace comprenant des fonctions évaluant des critères d'optimisation ;
- appliquer ladite configuration (140) à des outils d'évaluation ;
- déterminer (150) au moins deux critères d'optimisation principaux choisis parmi la performance de calculs, la consommation énergétique et/ou la surface dudit circuit, un critère principal étant déterminée à partir des résultats des outils d'évaluation et une base de données technologique ;
- déterminer si (160) un critère d'arrêt est vérifié ;

A chaque itération, la détermination de ladite configuration est optimisée via l'évaluation des fonctions relatives aux critères principaux.

L'arrêt desdites itérations est effectué en réponse à la vérification dudit critère d'arrêt et une génération d'au moins une configuration optimisée.

[Fig.1]

**Description**

**Domaine technique**

La présente invention concerne de manière générale les systèmes électroniques, et en particulier un procédé de détermination d'architectures matérielles de calcul par exploration de l'espace de conception.

Les architectures matérielles de calcul sont classiquement utilisées comme éléments de base pour la conception de systèmes sur puce.

Un système sur puce, encore appelé SoC (ou *System-on-Chip* selon l'expression anglo-saxonne correspondante) correspond à un système complet embarqué sur un circuit intégré qui comprend une multitude de composants électriques ou électroniques. Un tel circuit intégré implémente des fonctionnalités caractéristiques associées à une application ou un domaine applicatif spécifique, ainsi que des éléments génériques, tels des coeurs de processeurs, des éléments de mémorisation ou encore des entrées/sorties. Un circuit intégré comprend un dispositif matériel (ou dispositif hardware) qui est en générale associé à un logiciel configuré pour contrôler le dispositif hardware et en particulier pour mettre en oeuvre les fonctionnalités caractéristiques. Le dispositif hardware comprend, en particulier pour les SoC dits de hautes performances, une architecture matériel multi-coeurs (c'est-à-dire composée de plusieurs coeurs de calcul) et est produit à partir de briques matérielles assemblées. La conception du dispositif hardware comprend le développement de l'architecture matérielle des différentes briques de base et leur configuration à partir d'outils de Conception Assistée par Ordinateur ou CAO connus, selon un flot de conception. Un flot de conception comprend un ensemble d'étapes implémentées en utilisant un grand nombre d'outils. De tels outils permettent la conception proprement dite (par exemple la transformation d'une description de l'architecture à haut niveau en une description de plus bas niveau) ainsi que l'évaluation de cas de configurations d'architecture possibles. De tels outils sont également utilisés pour valider la conception complète d'un circuit SoC.

Avec l'augmentation de la complexité des circuits intégrés, un tel flux de conception entraine un accroissement de l'espace de conception pour l'exploration, ce qui peut entraîner de multiples itérations à chaque étape dans le flot de conception, une complexification des outils et des difficultés pour faire le lien entre les différents outils, ainsi qu'une augmentation du coût des ressources nécessaires.

Différents procédés et outils de conception ont été proposés pour tenter d'améliorer le flot de conception d'architectures matérielles de calcul. Des procédés connus utilisent des flots de conception manuels ou dynamiques faisant appel à différents simulateurs pour réaliser une exploration de l'espace de conception et des configurations d'architecture définies en appliquant un algorithme d'optimisation, comme décrit par exemple dans l'article "An Automatic Design Space Exploration Framework for Multicore Architecture Optimizations" de H. Calborean et al., 9th RoEduNet, vol. 14, 2010, ou comme décrit par exemple dans l'article "Multilevel simulation-based co-design of next génération HPC microprocessors" de L. Zaourar et al., International Workshop PMPBS (PMBS), Super Computing, St. Louis, United States, 2021.

Cependant, de tels procédés ne permettent pas d'obtenir un flot de conception dynamique capable de déterminer les meilleures configurations en prenant en compte de manière optimale l'ensemble des différents résultats délivrés par les outils d'évaluation et de conception disponibles, pour l'exploitation d'un large choix de paramètres d'évaluation. Ces procédés ne permettent pas non plus de supporter une vision multi-niveau de la conception d'un circuit intégré dans laquelle les résultats d'un niveau de conception pourraient être réutilisés pour améliorer les résultats d'un niveau précédent.

Il existe ainsi un besoin pour un procédé capable d'optimiser la détermination des architectures matérielles de calcul à utiliser pour la conception d'un circuit intégré.

**Résumé de l'invention**

La présente invention vient améliorer la situation en proposant un procédé de détermination, mis en oeuvre par ordinateur, d'une architecture matérielle d'un circuit intégré. Le procédé comprend au moins une pluralité d'itérations des étapes suivantes consistant à :

- appliquer un algorithme d'optimisation A à un espace d'exploration d'architecture E, de manière à déterminer au moins une configuration d'architecture candidate G, la configuration d'architecture candidate G appartenant à l'espace d'exploration d'architecture E, l'espace d'exploration d'architecture E comprenant un ensemble de fonctions objectifs F évaluant des critères d'optimisation $C_q$ associés à la configuration d'architecture candidate G ;

- appliquer la configuration d'architecture candidate G à une pluralité d'outils d'évaluation $O_m$, ce qui fournit des résultats d'évaluation des configurations d'architectures candidates G ;

- déterminer une valeur d'au moins deux critères d'optimisation $C_q$, les au moins deux critères d'optimisation dits principaux étant choisis parmi la performance de calculs, la consommation énergétique et/ou la surface du circuit intégré à concevoir, la valeur d'un des critères d'optimisation principaux étant déterminée en appliquant une fonction analytique $\mathcal{F}$ prenant en arguments au moins une information circuit et au moins une information technologique, la au moins une information circuit étant déterminée à partir des résultats d'évaluation fournis par au moins un outil d'évaluation $O_m$ parmi les outils d'évaluation $O_m$, la au moins une information technologique étant issue d'au moins une base de données technologique ; et

- déterminer si un critère d'arrêt est vérifié.

A chaque itération, la détermination de la configuration d'architecture candidate G est optimisée à partir de l'évaluation des fonctions objectifs F relatives aux valeurs déterminées des au moins deux critères d'optimisation principaux $C_q$.

Le procédé comprenant en outre un arrêt des itérations en réponse à la vérification du critère d'arrêt et une génération d'au moins une configuration optimisée d'architecture de calcul $G_{opt}$ à partir de la au moins une configuration d'architecture G.

Dans des modes de réalisation, le critère d'arrêt peut être défini en fonction d'une évaluation d'au moins une fonction objectifs $F_h$ relative à un critère d'optimisation principal $C_q$, à partir de la valeur déterminée du critère d'optimisation principal.

Alternativement, le critère d'arrêt peut être défini en fonction d'un temps prédéfini d'exécution de la pluralité d'itérations d'étapes d'optimisation.

Avantageusement, chaque outil d'évaluation $O_m$ peut être configuré pour générer un ensemble de résultats d'évaluation $R_{mg}$ associés à la au moins une configuration d'architecture G. Le procédé peut comprendre en outre une étape consistant à appliquer la configuration d'architecture candidate G à un premier outil d'évaluation $O_m$ parmi les outils d'évaluation $O_m$, à partir d'au moins un résultat d'évaluation $R_{mg}$ issu d'une étape préalable d'application de la configuration d'architecture candidate G à un deuxième outil d'évaluation $O_m$ parmi les outils d'évaluation $O_m$.

La génération de la au moins une configuration d'architecture G peut être effectuée en fonction de ladite pluralité d'outils d'évaluation $O_m$ utilisables.

Selon des modes de réalisation, le procédé peut comprendre en outre une étape préalable de réception d'un descripteur D d'architecture et une étape de génération de l'espace d'exploration E d'architecture à partir du descripteur D d'architecture et de l'algorithme d'optimisation A.

Avantageusement, un outil d'évaluation $O_m$ de la pluralité d'outils d'évaluation $O_m$ peut être un outil d'évaluation choisi parmi un simulateur de configuration d'architecture, un outil de compilation d'architecture, un outil d'évaluation de consommation, un outil basé sur une exploitation d'une base de données et un outil basé sur une exploitation d'une mémoire de données de configurations candidates. La mémoire de données de configurations candidates peut être utilisée pour sauvegarder des résultats d'évaluation issus de l'étape d'application de configurations d'architecture candidates G et/ou de l'étape de détermination de valeur de critères d'optimisation $C_q$ de configurations d'architecture candidates G.

Un autre objet de l'invention est une architecture matérielle de circuit intégré obtenue par la mise en oeuvre du procédé de détermination.

L'invention fournit en outre procédé de conception d'un circuit intégré comprenant une implémentation d'un circuit intégré à partir de l'architecture matérielle de circuit intégré.

L'invention fournit également un produit programme d'ordinateur comportant des instructions de code de programmation aptes à être mises en oeuvre par un ordinateur, l'ordinateur étant apte à mettre en oeuvre le procédé de détermination d'une architecture matérielle d'un circuit intégré.

Le procédé de détermination d'architectures matérielles de calcul selon les modes de réalisation de l'invention permet l'optimisation de l'exploration de l'espace de conception et des configurations d'architecture à analyser pour concevoir un circuit intégré optimisé.

Les modes de réalisation de l'invention fournissent ainsi une solution rapide, flexible et efficace permettant de déterminer une architecture de système sur puce complexe. Une telle solution a l'avantage d'être non seulement 'multi-niveau', en ce qu'elle est applicable à différents niveaux dans l'architecture du circuit intégré (c'est-à-dire au système complet, à l'architecture du système incluant les interconnexions entre les éléments de base, ou encore à la microarchitecture des éléments de base du circuit intégré), tout en assurant une exploration large, mais aussi 'mono-objectif' ou 'multi-objectifs'. L'exploration de l'espace de conception peut être réalisée à partir d'exécutions et de différentes combinaisons de ces outils d'évaluation divers et variés, fonctionnels ou extra-fonctionnels par exemple.

Il en résulte une solution non intrusive adaptée à différents procédés existants de flots de conception classiques de circuit (par exemple pour la génération de code RTL, de synthèse logique, de placement routage, etc.). En particulier, le procédé de détermination d'architectures matérielles de calcul selon les modes de réalisation est adaptable à n'importe quel flot de conception. Un tel procédé n'induit pas de modifier des étapes usuellement implémentées dans un flot de conception classiques de circuit et permet simplement l'ajout d'étapes. En outre, un tel procédé requière peu d'informations dites confidentielles d'un flot de conception classiques telles que des informations provenant du code RTL.

## Description des figures

D'autres caractéristiques, détails et avantages de l'invention ressortiront à la lecture de la description faite en référence aux dessins annexés donnés à titre d'exemple.

[Fig.1] La figure 1 est un organigramme représentant les étapes du procédé de conception d'architectures matérielles de circuit intégré, selon des modes de réalisation de l'invention.
[Fig.2] La figure 2 est un schéma représentant une structure globale d'un flot de conception d'architecture matérielle de circuit intégré, selon des modes de réalisation de l'invention.

## Description détaillée

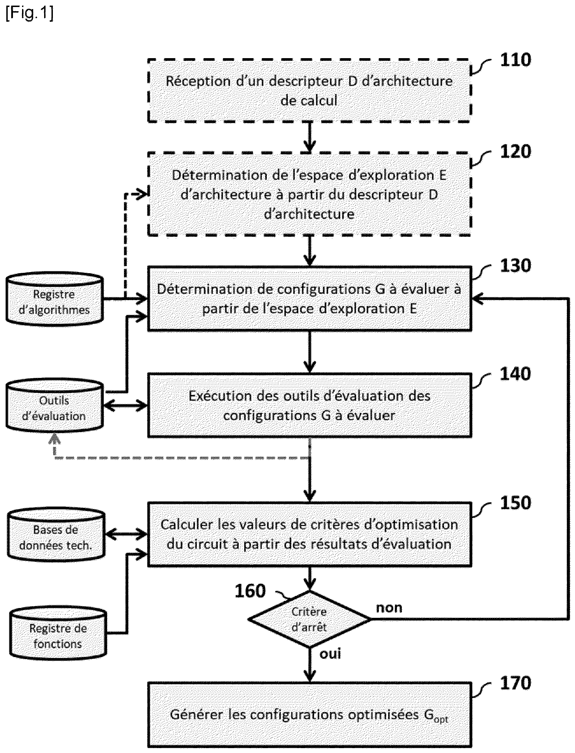

La figure 1 représente un procédé de détermination d'une architecture matérielle de circuit intégré, selon certains modes de réalisation de l'invention.

L'architecture matérielle de circuit intégré déterminée par un tel procédé permet de générer un fichier de description matérielle d'un circuit intégré (SoC par exemple). Le fichier de description matérielle du circuit intégré peut être écrit en langage de description de matériel, par exemple et sans limitation, en langage VHDL ou Verilog. Un tel fichier de description matérielle sera alors utilisé pour concevoir le circuit intégré selon un procédé existant de conception de circuit intégré. Le circuit intégré est potentiellement apte à exécuter tous types de calculs, et en particulier des calculs complexes.

Le circuit intégré peut être utilisé ou défini pour de nombreuses applications et domaines techniques variés. Le circuit intégré peut être utilisé par exemple et sans limitation dans des systèmes de télécommunication, dans des systèmes d'imagerie, des systèmes industriels (tels que des systèmes de cybersécurité, dans des systèmes associés à des processus de fabrication par exemple), dans des systèmes spécifiques au domaine bancaire ou fiscal, ou dans des systèmes pour des calculs scientifiques, tels que des systèmes de calculs hautes performances de type HPC, etc.

Le procédé de détermination d'architecture matérielle de circuit intégré selon les modes de réalisation de l'invention permet de déterminer l'architecture matérielle de circuit intégré à partir d'un descripteur D de l'architecture et/ou d'un espace d'exploration E d'architecture. L'architecture matérielle déterminée par le procédé selon les modes de réalisation de l'invention est avantageusement optimisée selon divers critères d'optimisation pour permettre une exécution efficace de calculs complexes ou spécifiques par le circuit intégré.

Le descripteur D d'architecture correspond à une première représentation (encore appelée 'représentation interne' ou 'représentation architecturale') d'un problème d'optimisation de conception d'architecture matérielle. L'espace d'exploration E d'architecture correspond à une deuxième représentation (encore appelée 'représentation mathématique') de ce problème d'optimisation de conception de l'architecture matérielle. L'espace d'exploration E peut ainsi être une traduction de la représentation interne en représentation mathématique.

Le descripteur D d'architecture et/ou l'espace d'exploration E d'architecture comprennent un ensemble d'éléments permettant de définir (ou décrire ou modéliser) une architecture matérielle de circuit intégré, tels que des paramètres du circuit intégré à concevoir (par exemple des paramètres structurels liés aux composants et/ou ressources du circuit), des objectifs d'optimisation du circuit (liés par exemple aux performances et/ou à la consommation et/ou au dimensionnement du circuit) et/ou des contraintes du circuit intégré à concevoir.

Le circuit intégré peut être par exemple un processeur de calcul haute performance hétérogène comprenant une pluralité de coeurs de calcul et différents éléments constitutifs (ou composants de circuit intégré tels que des mémoires. Dans un tel exemple, les paramètres du circuit intégré à concevoir peuvent comprendre les types de coeurs de calcul, le nombre de coeurs de calcul pour chaque type de coeurs, la hiérarchie des mémoires, la bande passante et le prélecture (ou le pré-chargement) des mémoires, et/ou l'interconnexion entre les différentes ressources de calcul (par exemple un réseau sur puce NoC, ou *Network on Chip* selon l'expression anglo-saxonne correspondante), etc.

Dans des modes de réalisations, les objectifs du circuit intégré à concevoir peuvent comprendre par exemple la maximisation de la performance de calcul du circuit intégré, la minimisation de la consommation énergétique du circuit intégré et/ou la minimisation de la surface (ou la taille) du circuit intégré. En particulier, la performance de calcul peut être associée par exemple à une donnée temporelle telle que la latence ou la fréquence d'exécution de calculs, la performance pouvant également être liée à la puissance crête de calcul, par exemple le nombre d'éléments de calcul du circuit intégré et leur taille, et/ou à l'empreinte mémoire de l'architecture matérielle, par exemple le nombre d'éléments de mémorisation du circuit intégré et leur taille.

Les contraintes du circuit intégré à concevoir peuvent être par exemple des contraintes de conception relatives aux paramètres prédéterminés du circuit et/ou aux objectifs, ou encore des contraintes physiques connues.

Dans des modes de réalisation, le descripteur D d'architecture peut être représenté selon un format spécifique à un flot de conception à mettre en oeuvre par le procédé selon les modes de réalisation de l'invention pour réaliser le circuit intégré. Par exemple, le descripteur D d'architecture peut être implémenté sous la forme d'un fichier informatique de type *'template* d'architecture de calculs' (c'est-à-dire de type patron d'architecture de calculs). Le descripteur D d'architecture peut comprendre une description dite haut niveau des paramètres, des objectifs et/ou des contraintes du circuit intégré à concevoir. Par exemple et sans limitation, le descripteur D d'architecture peut être un fichier texte et/ou un fichier XML comprenant un nombre de coeurs, leur type, leur taille, un nombre de mémoire, un nombre de réseau d'interconnexion, un nombre de bus, un nombre de NoC, la position des routeurs, la topologie, etc.

L'espace d'exploration E peut comprendre une ou plusieurs structures de données. En particulier, une structure de données peut comprendre un ensemble P de N paramètres à optimiser $P_n$ (appelés également paramètres à explorer ou variables de décisions) du circuit intégré à concevoir. L'indice 'n' associé à différents paramètres à optimiser est ainsi un entier compris entre 1 et N. L'ensemble P peut être défini selon l'expression (01) suivante :

$$P = \{P_1, \ldots, P_N\} \qquad \text{et } P \in \text{E} \qquad (01)$$

Pour chaque paramètre $P_n$, une structure de données de l'espace d'exploration E peut également comprendre un ou plusieurs ensembles $L_n$ de sous-paramètres associés au paramètre $P_n$. Ainsi, chaque ensemble $L_n$ peut comprendre $K_n$ sous-paramètres à optimiser $\ell_{nk}$ du circuit intégré à concevoir. L'entier $K_n$ est entier variable en fonction du paramètre $P_n$ considéré. L'indice 'k' associé à différents sous-paramètres de l'ensemble $L_n$ est ainsi un entier compris entre 1 et $K_n$. L'ensemble $L_n$ peut être défini selon l'expression (02) suivante :

$$L_n = \left\{\ell_{n1}, \ldots, \ell_{nK_n}\right\} \quad \text{et } L_n \in \text{E} \qquad (02)$$

Dans des modes de réalisation, un ensemble L peut également être associé à un sous-paramètre $\ell_{nk}$. Ainsi, un ensemble $L_{nk}$ peut être défini selon l'expression (03) suivante :

$$L_{nk} = \left\{\ell_{nk(1)}, \ldots, \ell_{nk(K_{nk})}\right\} \quad \text{et } L_{nk} \in \text{E} \qquad (03)$$

Ainsi, la ou les structures de données de l'espace d'exploration E comprenant les différents ensembles P et L peuvent être structurées de manière hiérarchique en fonction des dépendances entre paramètres et sous-paramètres.

En outre, une structure de données de l'espace d'exploration E peut comprendre un ensemble F de H fonctions objectifs et/ou de contraintes $F_h$ du circuit intégré à concevoir, et peut être défini selon l'expression (04) suivante :

$$F = \{F_1, \ldots, F_H\} \qquad \text{et } F \in \text{E} \qquad (04)$$

L'ensemble P et/ou le ou les ensembles L et/ou l'ensemble F peuvent par exemple être implémentés sous la forme de matrices, de tableaux, de listes ou de vecteurs. Les valeurs N, K et H sont des entiers supérieurs ou égaux à 2.

Par exemple et sans limitation, un ensemble (ou liste) P de paramètres P, à optimiser pour un circuit intégré comprenant une pluralité de coeurs de calcul peut être défini selon l'énumération (05) suivante :

P = {'$P_1$: nombre de cœurs', '$P_2$: type de chaque cœurs', '$P_3$: paramètres de la hiérarchie mémoire',
'$P_4$: bande passante mémoire', '$P_5$: NoC/Interconnexion', '$P_6$: présence d'un mécanisme de prélecture     (05)
en mémoire'}

La liste P peut ainsi comprendre, selon l'énumération (05) précédent, le nombre de coeurs du circuit intégré, le type de chaque coeur du circuit intégré, les paramètres de la hiérarchie de cache du circuit intégré, la bande passante de la mémoire du circuit intégré (ou *memory bandwidth* en anglais), le type de réseau d'interconnexion NoC du circuit intégré, et/ou la présence ou non d'un mécanisme de prélecture mémoire du circuit intégré (ou *memory prefetching* en anglais), etc. Il est à noter que si la présence d'un mécanisme de prélecture mémoire du circuit intégré est confirmée, des sous-paramètres peuvent comprendre le type et/ou la taille du mécanisme de prélecture mémoire.

Un ensemble $L_n$ de sous-paramètres $\ell_{nk}$ peut par exemple correspondre à une pluralité de valeurs, grandeurs ou métriques possibles associées à chaque paramètre $P_n$ de l'ensemble P précédent. Par exemple et sans limitation, un ensemble (ou liste) $L_n$ peut être défini selon les énumérations (06) et (07) suivantes :

- pour le paramètre 'P$_5$: NoC/Interconnexion' de la liste P, la liste $L_5$ peut être :

$$L_5 = \{'\ell_{51}: \text{topologie du réseau d'interconnexion NoC', } '\ell_{52}: \text{algorithme de routage', } '\ell_{53}: \text{nombre de routeurs', } '\ell_{54}: \text{position des routeurs', } '\ell_{55}: \text{type des routeurs'}\} \tag{06}$$

- pour le paramètre 'P$_3$: paramètres de la hiérarchie mémoire ' de la liste P, la liste $L_3$ peut être :

$$L_3 = \{'\ell_{31}: \text{instruction de cache n°1', } '\ell_{32}: \text{données de cache n°1', } '\ell_{33}: \text{instruction de cache n°2', } '\ell_{34}: \text{données de cache n°1', } '\ell_{35}: \text{la taille du cache niveau 3', } '\ell_{36}: \text{la taille du cache dernier niveau'}\} \tag{07}$$

Une liste $L_n$ (et notamment la liste $L_3$ précédente) peut ainsi comprendre, selon l'énumération (06) précédent, des instructions de cache (ou *cache instruction* en anglais), des données de cache (ou *data cache* en anglais), la taille du cache niveau 3 (ou SLC signifiant *System Level Cache* selon l'expression anglo-saxonne), et/ou la taille du cache dernier niveau (ou *LLC* signifiant *Last Level Cache* selon l'expression anglo-saxonne), etc.

Par ailleurs, par exemple pour le paramètre 'P$_3$: paramètres de la hiérarchie mémoire' de la liste P, un ensemble (ou liste) $L_{nk}$ peut être défini selon les énumérations (08), (09), (10) et (11) suivantes :

- pour le sous-paramètre '$\ell_{31}$: instruction de cache n°1' de la liste $L_3$, la liste $L_{31}$ peut être :

$$L_{31} = \{'\ell_{31(1)}: \text{taille de la ligne de cache', } '\ell_{31(2)}: \text{associativité', } '\ell_{31(3)}: \text{taille du cache pour les instructions', } '\ell_{31(4)}: \text{exclusivité', } '\ell_{31(5)}: \text{politique de remplacement', } '\ell_{31(6)}: \text{taille de la mémoire tampon écriture', } '\ell_{31(7)}: \text{prélecture'}\} \tag{08}$$

- pour le sous-paramètre '$\ell_{32}$: données de cache n°1' de la liste $L_3$, la liste $L_{32}$ peut être :

$$L_{32} = \{'\ell_{32(1)}: \text{taille de la ligne de cache', } '\ell_{32(2)}: \text{associativité', } '\ell_{32(3)}: \text{taille du cache pour les données', } '\ell_{32(4)}: \text{exclusuvté', } '\ell_{32(5)}: \text{politique de remplacement', } '\ell_{32(6)}: \text{taille de la mémoire tampon écriture', } '\ell_{32(7)}: \text{prélecture'}\} \tag{09}$$

- pour le sous-paramètre '$\ell_{33}$: instruction de cache n°2' de la liste $L_3$, la liste $L_{33}$ peut être :

$$L_{33} = \{'\ell_{33(1)}: \text{taille de la ligne de cache', } '\ell_{33(2)}: \text{associativité', } '\ell_{33(3)}: \text{taille du cache pour les instructions', } '\ell_{33(4)}: \text{exclusivité', } '\ell_{33(5)}: \text{politique de remplacement', } '\ell_{33(6)}: \text{taille de la mémoire tampon écriture', } '\ell_{33(7)}: \text{prélecture'}\} \tag{10}$$

- pour le sous-paramètre '$\ell_{35}$: la taille du cache niveau 3' de la liste $L_3$, la liste $L_{35}$ peut être :

$$L_{35} = \{'\ell_{35(1)}: \text{taille de la ligne de cache', } '\ell_{35(2)}: \text{associativité', } '\ell_{35(3)}: \text{\#tranche\_cache\_niveau\_systeme', } '\ell_{35(4)}: \text{exclusuvté', } '\ell_{35(5)}: \text{SLC slice', } '\ell_{35(6)}: \text{latence', } '\ell_{35(7)}: \text{politique de remplacement', } '\ell_{35(8)}: \text{taille de la mémoire tampon écriture', } '\ell_{35(9)}: \text{prélecture', } '\ell_{35(10)}: \text{bande passante SLC'}\} \tag{11}$$

Une liste $L_{nk}$ (et notamment une liste $L_{3k}$ précédente) peut ainsi comprendre, selon les énumérations (08), (09) et (10) et (11) précédentes, la taille de la ligne de cache (ou *cache line size* en anglais), l'associativité (ou *associativity* en anglais), la taille du cache pour les données ou les instructions (ou *cache size* en anglais), l'exclusivité (ou *clusivity en* anglais), la politique de remplacement (ou *replacement* en anglais), la taille de la mémoire tampon d'écriture (ou *write buffer size* en anglais), et/ou la prélecture (ou *prefetcher* en anglais), etc. Il est à noter que la politique de replacement des données fait référence à une ou plusieurs règles de définition de conservation ou d'abandon de données.

Une liste $L_{nk}$ (et notamment la liste $L_{35}$ précédente) peut également comprendre, selon l'énumération (11) précédente, une tranche de cache au niveau système (ou *#SLC slice* en anglais), des paramètres SLC slice (ou *SLC slice* en anglais), la latence (ou *latency* en anglais), et/ou la bande passante SLC (ou *SLC bandwidth* en anglais), etc. Il est à noter que les sous-paramètres ou listes de valeurs associés à la latence ou à des tailles peuvent par exemple être des valeurs discrètes.

Une fonction objectif et/ou de contrainte $F_h$ d'un ensemble (ou liste) F est définie pour évaluer un ou plusieurs critères d'optimisation du circuit associé à une configuration de circuit intégré à concevoir. La fonction objectif et/ou de contrainte $F_h$ correspond alors à une formulation mathématique associée à un ou plusieurs objectifs et/ou contraintes du circuit intégré à concevoir.

Il est à noter qu'il existe une pluralité Q de critères d'optimisation $C_q$ de circuit. La valeur Q est un entier supérieur ou égal à 3. Dans des modes de réalisation, les critères d'optimisation peuvent comprendre les trois critères d'optimisation principaux suivants :

- un premier critère d'optimisation principal du circuit $C_1$ correspondant à la performance de calculs du circuit intégré qui peut être définie par exemple par un nombre d'opérations flottantes par seconde exprimé en FLOPS (ou *Floating-point Operations Per Second* selon l'expression anglo-saxonne), une donnée temporelle du circuit intégré telle qu'une latence (en seconde) ou une fréquence de fonctionnement (en Hz), ou encore une mesure d'une taille mémoire (en nombre de bits ou d'octets) ;

- un deuxième critère d'optimisation principal du circuit $C_2$ correspondant à la consommation énergétique du circuit intégré ; et

- un troisième critère d'optimisation principal du circuit $C_3$ correspondant à la surface du circuit intégré.

Avantageusement, d'autres critères d'optimisation $C_q$ du circuit peuvent être définis, tels que le prix du circuit, l'empreinte environnementale du circuit, le temps de fabrication du circuit, le niveau de sécurité du circuit, etc.

Par exemple et sans limitation, l'ensemble F des fonctions objectifs et/ou de contraintes $F_h$ peut comprendre une première fonction objectif $F_1$ associé au premier critère d'optimisation principal $C_1$ correspondant à la performance de calculs du circuit intégré. La première fonction objectif $F_1$ peut alors être une fonction d'argument maximum (ou Argmax) de la performance de calculs du circuit intégré $C_1$, telle que définie selon l'équation (12) suivante :

$$F_1 = \mathrm{Argmax}\ (C_1) \qquad (12)$$

La liste F peut également comprendre une deuxième et une troisième fonction objectif, $F_2$ et $F_3$, associées respectivement au deuxième et au troisième critère d'optimisation principal du circuit, $C_2$ et $C_3$, correspondant à la consommation énergétique du circuit intégré et à la surface du circuit intégré. La deuxième fonction objectif $F_2$ et la troisième fonction objectif $F_3$ peuvent alors être une fonction d'argument minimum (ou Argmin) de la consommation énergétique du circuit intégré $C_2$ et une fonction d'argument minimum de la surface du circuit intégré $C_3$, telles que définies selon les équations (13) et (14) suivantes :

$$F_2 = \mathrm{Argmin}\ (C_2) \qquad (13)$$

$$F_3 = \mathrm{Argmin}\ (C_3) \qquad (14)$$

Telles qu'utilisées ici, notamment dans les équations (12), (13) et (14) précédentes, les fonctions d'argument maximum et minimum font références aux fonctions de détermination de la ou des valeurs respectivement minima et maxima possible d'une variable représentée par un ensemble de données.

En particulier, il est à noter qu'une fonction objectif de la liste F est une fonction recherchant à minimiser ou maximiser un critère exprimé en objectif d'optimisation du circuit. Une fonction de contrainte de la liste F est une fonction recherchant à respecter une contrainte du circuit intégré à concevoir. Par exemple et sans limitation, une fonction de contrainte $F_h$ peut alors être une fonction d'inégalité entre plusieurs paramètres de la liste P et/ou sous-paramètres d'une liste $L_n$. Si la contrainte correspond à des relations de tailles de cache pour les données ou les instructions des niveaux 1, 2 et 3, des fonctions de contraintes $F_h$ peuvent définies selon l'expression (15) suivante :

$$\ell_{31(3)} \le \ell_{32(3)}, \text{ et} \qquad \ell_{32(3)} \le \ell_{33(3)} \quad (15)$$

Par ailleurs, l'espace d'exploration E peut être adapté pour être utilisé par un ou plusieurs algorithmes d'optimisation A.

Tel qu'utilisée ici, l'expression « algorithme d'optimisation » fait référence à un algorithme exécutant une recherche opérationnelle RO (encore appelée 'optimisation combinatoire' ou 'aide à la décision') pour analyser des situations complexes et notamment pour élaborer une ou plusieurs solutions au problème de conception d'une architecture matérielle à optimiser. Un algorithme d'optimisation peut être tout algorithme ou modèle mathématique apte à déterminer différentes variables de décisions (i.e. paramètres et sous-paramètres) et différentes fonctions objectifs et/ou de contraintes d'un espace d'exploration E reliées à la recherche de solutions optimisées d'une représentation interne d'un descripteur D de conception d'architecture.

Par exemple et sans limitation, le problème de conception d'une architecture matérielle défini par le descripteur D de conception d'architecture peut être équivalent ou proche d'un problème connu d'optimisation combinatoire de sorte que la représentation mathématique du problème, c'est-à-dire l'espace d'exploration E, peut être transcrite et enrichie sur ce problème connu (Problème Linéaire, Problème Linéaire en Nombre Entiers, graphe, génome, etc.). Dans ce cas, un algorithme A connu comme étant efficace pour la résolution de ce problème connu d'optimisation combinatoire peut être appliqué (Simplex, algorithme de séparation et évaluation, algorithme de recherche de plus court chemin, algorithme génétique, etc.). Ainsi, en fonction de l'identification du problème de conception d'une architecture matérielle à optimiser, un algorithme A d'optimisation peut être adapté, et donc l'espace d'exploration E (d'architecture, de micro-architecture ou encore de système) induit peut être généré automatiquement.

Comme représenté sur la figure 1, le procédé de détermination d'architecture comprend une étape 110 de réception du descripteur D de l'architecture de calcul.

À l'étape 120, l'espace d'exploration E d'architecture peut être généré à partir du descripteur D de l'architecture de calcul. Dans cette étape, l'espace d'exploration d'architecture peut être construit à partir du descripteur générique d'architecture, comprenant notamment au moins un paramètre de l'architecture de circuit à explorer.

Tel que représenté sur la figure 1, le procédé de conception d'architectures matérielles de circuit intégré comprend une pluralité d'itérations d'étapes d'optimisation 130 à 150 associées à une exploration de conception d'architectures matérielles multi-critères.

À l'étape 130, l'algorithme A d'optimisation de recherche opérationnelle est appliqué à l'espace d'exploration E d'architecture, de manière à générer, à chaque itération 'i' du procédé de conception, une ou plusieurs configurations d'architecture candidates $G_{ij}$ du circuit intégré. L'indice 'j' est associé à différents configurations générées à une itération i. Le nombre de configurations d'architecture candidates générées peut être différents à chaque itération i. En particulier, l'étape 130 peut déterminer au moins deux configurations d'architectures candidates à évaluer, construites à partir de l'espace d'exploration d'architecture de circuit, en utilisant au moins un algorithme d'optimisation A.

Une configuration d'architecture candidate $G_{ij}$ comprend un sous-ensemble des éléments P dont certains paramètres ou variables de décisions sont fixés. Une configuration d'architecture candidate $G_{ij}$ peut également comprendre des sous-ensembles des éléments L dont certains sous-paramètres sont fixés. La configuration d'architecture candidate $G_{ij}$ correspond alors à un sous-ensemble (i.e. une instance) de l'espace d'exploration d'architecture E. Chaque configuration d'architecture candidate $G_{ij}$ de l'ensemble des configurations générées est une configuration d'architecture unique, et est donc différente de chacune des configurations générées au cours de la même itération i et au cours des itérations précédents [1, i-1].

Avantageusement, la recherche opérationnelle peut être appliquée de manière hiérarchique à l'espace d'exploration E d'architecture.

Par exemple et sans limitation, la ou les premières itérations (désignées généralement par l'indice i) du procédé de conception peuvent être adaptées de manière à générer une ou plusieurs configurations d'architecture candidates $G_{ij}$ associées à l'optimisation des paramètres $P_n$ de la liste P. De même, pour une ou plusieurs configurations $G_{ij}$ sélectionnées pour optimiser l'ensemble des paramètre $P_n$ de la liste P, une ou plusieurs itérations suivantes peuvent être adaptées de manière à générer, pour chaque paramètre $P_n$, une ou plusieurs configurations d'architecture candidates $G_{ij}$ associées à l'optimisation d'un ou plusieurs sous-paramètres $\ell_{nk}$ de la liste $L_n$. Et ainsi de suite, pour une ou plusieurs

configurations $G_{ij}$ sélectionnées pour optimiser l'ensemble des paramètre $P_n$ de la liste P et l'ensemble des sous-paramètres $\ell_{nk}$ d'une liste $L_n$, une ou plusieurs itérations suivantes peuvent être adaptées de manière à générer, pour chaque sous-paramètre $\ell_{nk}$, une ou plusieurs configurations d'architecture candidates $G_{ij}$ associées à l'optimisation d'un ou plusieurs sous-paramètres de la liste $L_{nk}$.

L'algorithme A d'optimisation appliqué à l'étape d'optimisation 130 du procédé peut être un algorithme A d'optimisation sélectionné parmi un ensemble d'algorithmes d'optimisation, qui peuvent être par exemple stockés dans un registre d'algorithmes $R_A$.

Avantageusement, l'algorithme A d'optimisation peut être sélectionné à l'étape 120 parmi les algorithmes de l'ensemble d'algorithme stockés dans le registre $R_A$. Les éléments P, L et F de l'espace d'exploration E d'architecture peuvent ainsi être générés à partir du descripteur D d'architecture et de l'algorithme A d'optimisation sélectionné. L'espace d'exploration E d'architecture peut alors être utilisé à l'étape 130 par l'algorithme A d'optimisation sélectionné.

En particulier, l'algorithme A d'optimisation peut être sélectionné à partir des objectifs et/ou contraintes du circuit intégré à concevoir. Par exemple et sans limitation, un objectif de conception peut être la minimisation de la latence d'un circuit intégré. Le circuit intégré peut être constitué de plusieurs coeurs comprenant un nombre X de routeurs. Chaque routeur est caractérisé par une position spatiale sur le circuit et peut être connecté à un ou plusieurs routeurs par une connexion. Un tel objectif de minimisation de la latence du circuit peut correspondre à la recherche d'une topologie d'un réseau d'interconnexion optimisé entre les routeurs dans le circuit, c'est-à-dire, à la recherche du chemin de connexions le plus court à partir d'une entrée (un premier routeur) et vers une sortie (un $X^{ième}$ routeur) pour distribuer (ou transmettre) des données au plus vite entre routeurs à travers le circuit. Dans ce cas, l'algorithme A d'optimisation sélectionné peut être avantageusement issu de la théorie des graphes. En particulier, l'algorithme A d'optimisation peut comprendre la détermination d'un Graphe comprenant un certain nombre de points, tels que chaque point correspond à (ou représente) la position spatiale d'un routeur dans le circuit intégré. L'optimisation consiste ainsi à déterminer le plus court chemin entre chaque routeur deux à deux pour obtenir un chemin global minimisé entre un premier et un $X^{ième}$ routeur. Chaque chemin entre deux routeurs (c'est-à-dire une arrête du Graphe) correspond à (ou représente) une connexion possible entre deux routeurs du circuit intégré.

Dans des modes de réalisation, l'algorithme A d'optimisation peut être sélectionné à partir d'une ou plusieurs fonctions objectifs $F_h$. Par exemple, un critère d'optimisation $C_4$ peut correspondre à la latence d'un circuit intégré, c'est-à-dire par exemple à la mesure du nombre de « sauts » ou de connexions (et/ou la mesure du temps de connexions) entre les différents éléments du circuit. Une fonction objectif $F_4$ peut alors être une fonction d'argument minimum de la latence du circuit intégré, tel que définie selon l'équation (16) suivante :

$$F_4 = \text{Argmin} \, (C_4) \qquad (16)$$

Dans ce cas, l'algorithme A d'optimisation sélectionné peut être défini à partir de la détection d'une fonction d'argument minimum associée au critère d'optimisation du circuit $C_4$.

La génération des configurations d'architecture candidates $G_{ij}$ à la première étape d'optimisation 130 est effectuée en utilisant un ensemble de paramètres caractéristiques associé à un ou plusieurs outils d'évaluation $O_m$ de configuration d'architecture donnés parmi M outils d'évaluation de configuration d'architecture. L'indice 'm' associé à différents paramètres d'outils d'évaluation $O_m$ est ainsi un entier compris entre 1 et M.

Un outil d'évaluation $O_m$ peut être tout outil informatique adapté pour analyser (ou évaluer) une configuration d'architecture. Un outil d'évaluation $O_m$ présente des grandeurs d'entrée $V_{mg}$ prédéfinies, correspondant aux éléments devant être fournis à cet outil d'évaluation, et délivre en sortie une ou plusieurs grandeurs de sortie $R_{mg}$ correspondant à des résultats d'évaluation. Pour une configuration d'architecture $G_{ij}$ donnée que l'on souhaite évaluer au moyen d'un outil d'évaluation $O_m$, il convient donc de fournir à cet outil des valeurs des grandeurs d'entrée $V_{mg}$ associées à une configuration d'architecture $G_{ij}$ donnée. L'outil d'évaluation $O_m$ délivrera en sortie une ou plusieurs valeurs des grandeurs de sortie $R_{mg}$ correspondant à des résultats d'évaluation après analyse de la configuration d'architecture $G_{ij}$ donnée.

Un ensemble de paramètres caractéristiques associé à un outil d'évaluation $O_m$ peut comprendre par exemple le type de grandeurs d'entrée $V_{mg}$ et/ou de grandeurs de sortie $R_{mg}$ prédéfinies.

Par exemple et sans limitation, un outil d'évaluation $O_m$ peut être un simulateur de jeux d'instructions fonctionnel, un simulateur de hiérarchie mémoire, un simulateur d'architecture au niveau RTL (de l'anglais *Register Transfer Level*, ou Niveau de Transfert de Registres), tels que : VPSim, GEM5, Virtualizer ou Vista, ModelSim ou Questa, l'outil informatique Open source DRAMSys ou encore DRAMPower, etc.

Un outil d'évaluation $O_m$ peut également être un outil de compilation d'architecture comme l'outil « Design Compiler » de Synopsys, ou un outil d'évaluation orientée mémoire et entrées/sorties comme par exemple l'outil informatique Open source CACTI.

Dans l'exemple d'un outil d'évaluation $O_m$ de type simulateur VPSim, des grandeurs d'entrée possibles $V_{mg}$

du simulateur VPSim peuvent être des paramètres liés à l'architecture matérielle du circuit intégré, tels que le nombre de coeurs' ou le 'type de coeurs'. Dans l'exemple d'un outil d'évaluation $O_m$ de type simulateur GEM5, des grandeurs d'entrée possibles $V_{mg}$ du simulateur GEM5 peuvent être des paramètres liés à la micro-architecture du circuit intégré, tels que les sous-paramètres associés à la micro-architecture des coeurs comme les sous-paramètres 'prélecture de données', 'taille et nombre de registres', etc.

Un exemple de grandeur de sortie $R_{mg}$ peut être une estimation de la performance de calculs du circuit intégré, ou encore des évaluations d'accès d'interconnexions ou de mémoire, par exemple en nombre, en temps ou en consommation énergétique.

Dans l'exemple d'un outil d'évaluation $O_m$ de type simulateur VPSim, une grandeur de sortie $R_{mg}$ du simulateur VPSim peut être le temps d'exécution d'une application sur une configuration d'architecture $G_{ij}$ ou plus généralement une autre métrique liée à l'architecture telle que le nombre d'accès au cache (ou *cache hit* en anglais), ou le nombre de défaut de cache (ou *cache miss* en anglais) par exemple.

Dans des modes de réalisation, un outil d'évaluation $O_m$ peut être associé également à une ou plusieurs grandeurs de fonctionnement $t_m$. Une grandeur de fonctionnement $t_m$ peut être par exemple associée au temps d'analyse (ou borne de temps d'exploration) d'une configuration d'architecture $G_{ij}$ par l'outil d'évaluation $O_m$. La définition des grandeurs de fonctionnement $t_m$ peut impacter la valeur des grandeurs de sortie $R_{mg}$ de l'outil d'évaluation. L'ensemble de paramètres caractéristiques associé à un outil d'évaluation $O_m$ peut également comprendre par exemple des grandeurs de fonctionnement $t_m$.

Dans des modes de réalisation, plusieurs outils d'évaluation $O_m$ peuvent être prévus pour évaluer une même grandeur de sortie $R_{mg}$, mais délivrer après simulation/évaluation des valeurs différentes de ces grandeurs de sortie $R_{mg}$ et chaque grandeur de sortie $R_{mg}$ peut en outre être associée à des grandeurs de fonctionnement $t_m$ distinctes. Par exemple, un simulateur VPSim et un simulateur GEM5 peuvent délivrer chacun une estimation de la performance de calculs du circuit intégré. Pour le simulateur GEM5, l'estimation de la performance peut être obtenue selon un temps d'analyse très élevé, ralentissant ainsi l'exploration au global d'une configuration d'architecture $G_{ij}$. Pour un outil d'évaluation $O_m$ de type simulateur VPSim, l'estimation de la performance peut être obtenue selon un temps d'analyse très court, accélérant ainsi l'exploration globale d'une configuration d'architecture $G_{ij}$. Une estimation de la performance délivrée par le simulateur VPSim peut être qualifiée de moins précise (ou plus approximative) par rapport à une estimation délivrée par le simulateur GEM5 alors qualifiée de plus détaillée. D'autres grandeurs de sortie $R_{mg}$ peuvent être issues d'un simulateur VPSim et/ou d'un simulateur GEM5, tels que le nombre d'accès à certaines ressources, le type d'accès, etc.

Les outils d'évaluation $O_m$ peuvent être préalablement sélectionnés parmi un ensemble d'outils disponibles en fonction de conditions de sélection d'outils.

Une configuration d'architecture $G_{ij}$ peut être représentée par une structure de donnée, telle qu'une matrice, comprenant des paramètres sélectionnés et/ou déterminés et/ou calculés à partir de l'espace d'exploration E d'architecture. La suite de la description sera faite en référence à une structure de donnée de configuration d'architecture $G_{ij}$ de type matrice de paramètres à titre d'exemple non limitatif.

Selon certains modes de réalisation, la matrice de paramètres d'une configuration d'architecture $G_{ij}$ peut être déterminée à l'étape 130 en prenant en compte un ou plusieurs outils d'évaluations $O_m$ sélectionnés. En particulier, la matrice de paramètres d'une configuration d'architecture $G_{ij}$ peut être déterminée en prenant en compte une partie au moins des grandeurs d'entrée possibles $V_{mg}$ du ou des outils d'évaluation $O_m$ sélectionnés.

Par exemple et sans limitation, en supposant que les outils d'évaluation sélectionnés comprennent un premier outil d'évaluation $O_1$ (par ex. le simulateur VPSim) et un deuxième outil d'évaluation $O_2$ (par ex. le simulateur GEM5), une configuration d'architecture $G_{ij}$ peut être générée de manière à comprendre des éléments associés à des grandeurs d'entrée possibles $V_{1g}$ du premier outil d'évaluation $O_1$ (simulateur VPSim) et des grandeurs d'entrée possibles $V_{2g}$ du deuxième outil d'évaluation $O_2$ (simulateur GEM5). Autrement dit, si un outil d'évaluation ne permet pas d'évaluer des différences entre plusieurs valeurs d'un paramètre (ou sous-paramètre) donné de l'espace d'exploration E, alors ce paramètre n'est pas considéré dans l'opération de génération d'une configuration d'architecture $G_{ij}$ à évaluer. Ainsi, l'opération de génération d'une configuration d'architecture $G_{ij}$ à explorer considère un sous-ensemble de l'espace d'exploration E pour choisir une nouvelle configuration à simuler/évaluer en tenant compte du ou des outils d'évaluation utilisés (ou sélectionnés/choisis).

Dans des modes de réalisation, des liens d'exécution entre un premier outil d'évaluation $O_m$ sélectionné et un deuxième outil d'évaluation $O_{(m+1)}$ sélectionné ou disponible peuvent être déterminés préalablement à l'étape 130. Par exemple et sans limitation, l'exécution d'un outil d'évaluation $O_3$ sélectionné donné peut dépendre de certaines valeurs de grandeurs d'entrée $V_{3g}$ non disponibles dans une configuration d'architecture $G_{ij}$ à déterminer. En revanche, ces valeurs de grandeurs d'entrée $V_{3g}$ de l'outil d'évaluation $O_3$ sélectionné peuvent correspondre ou être associées à des valeurs de grandeurs de sortie $R_{4g}$ accessibles via l'exécution d'un autre outil d'évaluation $O_4$ disponible. Dans un tel mode de réalisation, en plus de la sélection de l'outil d'évaluation $O_3$, l'autre outil d'évaluation $O_4$ peut être également sélectionné parmi l'ensemble d'outils d'évaluation $O_m$ disponibles, en réponse à la détermination de ce lien d'exécution entre l'outil d'évaluation $O_3$ et l'autre outil d'évaluation $O_4$.

Dans un tel mode de réalisation, la matrice de paramètres d'une configuration d'architecture $G_{ij}$ peut alors comprendre des éléments associés à des grandeurs d'entrée possibles $V_{4g}$ de l'outil d'évaluation $O_4$.

À l'étape 140, les configurations d'architecture $G_{ij}$ candidates déterminées à l'étape 130 sont évaluées par une pluralité d'outils d'évaluation $O_m$ choisie.

Pour chaque configuration d'architecture $G_{ij}$ à évaluer, l'étape 140 comprend ainsi la sélection d'éléments compris dans la configuration d'architecture $G_{ij}$ requis pour la détermination des valeurs des grandeurs d'entrée $V_{mg}$ d'un outil d'évaluation $O_m$ de la pluralité choisie des outils pour l'évaluation des configurations candidates $G_{ij}$.

Par ailleurs, à l'étape 140, au moins deux outils d'évaluation de la pluralité choisie des outils peuvent être exécutés en parallèle.

Dans des modes de réalisation, les outils d'évaluation $O_m$ utilisés à l'étape 140 peuvent être les outils d'évaluation $O_m$ sélectionnés à l'étape 130 et considérés pour la génération de la matrice de paramètres d'une configuration d'architecture G.

Dans des modes de réalisation, le procédé peut comprendre, avant l'exécution des outils d'évaluation à l'étape 140, une étape préalable de transformation (encore appelée conversion, transcription, ou traduction) d'une partie au moins des configurations d'architecture candidates $G_{ij}$ en fichiers d'entrée compréhensibles (c'est-à-dire lisibles ou déchiffrables) par les outils d'évaluation $O_m$. En particulier, un fichier d'entrée d'un outil d'évaluation $O_m$ peut être généré à partir de la transcription de la sélection d'éléments d'une configuration d'architecture candidate $G_{ij}$ en valeurs des grandeurs d'entrée $V_{mg}$ d'un outil d'évaluation $O_m$. Cette étape préalable de transformation permet la conversion de chaque configuration d'architecture candidate en plusieurs descriptions (représentées par exemple par des fichiers de description) adaptées aux outils d'évaluation d'architectures de calcul.

De telles descriptions adaptées aux outils d'évaluation d'architectures de calcul peuvent être d'au moins deux niveaux de description, les outils d'évaluation $O_m$ d'architectures de calcul évaluant au moins deux niveaux de description du circuit intégré.

Dans des modes de réalisation, les niveaux de description du circuit intégré peuvent correspondre à :

- une description haut niveau du circuit intégré complet,

- à une description de l'architecture du circuit décrite en éléments de base incluant les interconnexions entre les éléments de base, ou

- à une description de la microarchitecture des éléments de base du circuit intégré.

Dans des modes de réalisation, l'étape préalable de transformation de configuration peut être effectuée à partir d'un premier registre de traduction $R_{T1}$ associé à un ou plusieurs outils d'évaluation $O_m$. Le premier registre de traduction $R_T$ peut comprendre des éléments de transcription comme des scripts python par exemple. Les éléments de transcription associés aux outils d'évaluation $O_m$ sélectionnés à exécuter sont alors appliqués à une configuration d'architecture candidate $G_{ij}$ pour générer des fichiers d'entrée des outils d'évaluation $O_m$. La sélection des éléments de transcription associés aux outils d'évaluation $O_m$ peut être effectuée en fonction de la détermination des configurations d'architecture candidate $G_{ij}$ à l'étape 130 et/ou de la sélection des outils d'évaluation $O_m$ à l'étape 140. Pour un outil d'évaluation de type simulateur VPSim par exemple, les fichiers d'entrée peuvent être déterminés à partir d'un script python générant une plateforme matérielle adaptée au simulateur VPSim (par exemple en termes de nombre de coeurs, de type, de paramètres mémoire, de paramètres NoC, etc.).

L'étape 140, l'exécution des outils d'évaluation fournit ainsi des valeurs de résultats d'évaluation de chaque configuration d'architecture $G_{ij}$ candidate.

L'étape de transformation préalable, et l'application d'au moins deux desdits outils d'évaluation d'architecture de circuit à chacune des configurations d'architectures candidates, permet d'obtenir des résultats d'évaluation et de comparer les configurations d'architectures candidates de manière automatique pendant l'exécution du procédé.

Avantageusement, le procédé peut comprendre, après l'étape 140 d'évaluation des configurations candidates par la pluralité d'outils d'évaluation $O_m$ choisie, une étape de réception de l'ensemble des valeurs de grandeurs de sortie $R_{mg}$. L'ensemble des valeurs de grandeurs de sortie $R_{mg}$ correspond ainsi aux résultats d'évaluation, après analyse, de chaque configuration d'architecture G.

Dans des modes de réalisation où certaines au moins des valeurs de grandeurs d'entrée $V_{mg}$ des outils d'évaluation $O_m$ choisis à l'étape 130 dépendent d'une ou plusieurs grandeurs de sorties possibles $R_{mg}$ des outils d'évaluation $O_m$, l'étape 140 peut comprendre, pour chaque configuration candidate :

- l'évaluation de la configuration candidate $G_{ij}$ par une première partie de la pluralité d'outils d'évaluation $O_m$ choisie,

- la réception de l'ensemble des valeurs de grandeurs de sortie $R_{mg}$ correspondant aux résultats d'évaluation après analyse de la configuration d'architecture $G_{ij}$ par première partie de la pluralité d'outils d'évaluation $O_m$ choisie, puis

- l'évaluation de la configuration candidate $G_{ij}$ par une deuxième partie de la pluralité d'outils d'évaluation $O_m$ choisie, la deuxième partie de la pluralité d'outils d'évaluation $O_m$ ayant un lien de dépendance avec la première partie de la pluralité d'outils d'évaluation $O_m$ choisie.

Dans des modes de réalisation, le procédé de détermination d'architecture matérielle peut comprendre une étape de transformation (ou transcription, traduction) des résultats d'évaluation des configurations d'architecture candidates G, obtenus à l'étape 140, en fichiers d'entrée des outils d'évaluation $O_m$ et/ou en une représentation mathématique exploitable pour la mise en oeuvre d'une recherche opérationnelle. L'étape de transformation des résultats d'évaluation peut être effectuée à partir du premier registre de traduction $R_{T1}$. Par exemple et sans limitation, des éléments de transcription associés aux outils d'évaluation $O_m$ peuvent être sélectionnés parmi les éléments du registre $R_{T1}$, et appliqués à une partie au moins des résultats d'évaluation d'outils d'évaluation $O_m$. L'étape de transformation des résultats d'évaluation peut être une conversion automatique des résultats d'évaluation en des fichiers de description.

L'application d'un élément de transcription à au moins une partie des résultats d'évaluation peut permettre par exemple de générer un ou plusieurs fichiers d'entrée d'autres outils d'évaluation $O_m$ à exécuter.

L'application d'un élément de transcription à une partie au moins des résultats d'évaluation peut permettre également de générer par exemple une ou plusieurs matrices associées à une représentation mathématique exploitable dans le cadre de la recherche opérationnelle 130. Par exemple, la transformation des résultats d'évaluation en représentation mathématique peut correspondre à leur transformation dans un format (par exemple entier, binaire, etc.) exploitable via l'exécution d'un algorithme A d'optimisation.

La sélection des éléments associés aux outils d'évaluation $O_m$ peut être effectuée à l'étape de transformation des résultats d'évaluation en fonction de la détermination des configurations d'architecture candidates $G_{ij}$ et/ou du choix des outils d'évaluation $O_m$.

À l'étape 150, deux ou plusieurs valeurs de critère d'optimisation du circuit $C_q$ sont déterminées à partir de résultats d'évaluation des configurations candidates $G_{ij}$ obtenus à l'étape 140.

Deux critères d'optimisation de l'ensemble des critères d'optimisation du circuit à déterminer à l'étape 150 peuvent être choisis parmi des critères d'optimisation antagonistes caractérisant le circuit intégré à concevoir, c'est-à-dire choisies parmi au moins un critère d'optimisation principal de performance de calculs, un critère d'optimisation principal de consommation énergétique et un critère d'optimisation principal de surface d'un circuit intégré.

Par exemple et sans limitation, un critère d'optimisation du circuit $C_q$ peut être la performance de calculs $C_1$ (en termes de temps d'exécution de calculs) associée à une configuration d'architecture candidate $G_{ij}$. La valeur de la performance de calculs $C_1$ peut être calculée à partir de l'estimation de la performance déterminée par un premier outil d'évaluation (par exemple le simulateur VPSim) ou par un deuxième outil d'évaluation (par exemple le simulateur GEM5).

En outre, à l'étape 150, au moins une valeur d'un critère d'optimisation du circuit $C_q$ défini parmi l'ensemble des critères d'optimisation du circuit à déterminer est calculée au moyen d'une ou plusieurs formules analytiques (ou fonctions analytiques) notées $\mathcal{F}$. Une formule analytique $\mathcal{F}$, utilisée dans le calcul de la valeur d'un critère d'optimisation du circuit $C_q$, prend en paramètres d'entrée au moins une information circuit (notée de façon générique $I_c$) et au moins une information technologique (notée de façon générique $I_t$).

Un critère d'optimisation $C_q$ du circuit à calculer à partir d'une fonction analytique $\mathcal{F}$ peut être la performance de calculs $C_1$, la consommation énergétique $C_2$ (statique et/ou dynamique) d'un circuit intégré à concevoir et/ou la surface de ce circuit $C_3$ associée à une configuration d'architecture candidate $G_{ij}$.

Une information circuit peut être une information liée à la structure du circuit intégré à concevoir et/ou une information liée à l'activité de fonctionnement du circuit intégré à concevoir. Par exemple et sans limitation, une information liée à la structure peut correspondre à un nombre ou un type d'éléments constitutifs d'un circuit intégré, tel qu'un nombre ou un type de coeurs dans le circuit. Une information liée à l'activité de fonctionnement peut correspondre à un nombre ou à un type d'accès en mémoire, à un nombre ou à un type d'accès à un élément constitutif du circuit intégré, à un nombre ou à un type de sollicitation d'un élément constitutif du circuit intégré ou d'une chaîne d'éléments constitutifs du circuit intégré, à un nombre ou à un type de d'opérations effectuées par le circuit intégré, etc. Le type d'informations liées à l'activité de fonctionnement disponibles peut dépendre du niveau de conception du circuit intégré. Par exemple, la latence de calcul d'un élément constitutif du circuit peut être une information liée à l'activité de fonctionnement et permet de calculer une latence plus globale ou une grandeur liée à la consommation énergétique par une formulation analytique $\mathcal{F}$.

Une information circuit peut être déterminée à partir d'un ou plusieurs résultats d'évaluation obtenus à l'étape 140, c'est-à-dire d'une ou plusieurs valeurs de grandeurs de sortie $R_{mg}$ issues d'au moins un des outils d'évaluation $O_m$.

Une information technologique est déterminée à partir d'une ou plusieurs bases de données technologiques. Une base de données technologiques comprend des données pour des éléments constitutifs de circuit pouvant être fabriqués selon une technologie de conception de circuit intégrée donnée. Par exemple et sans limitation, une information technologique peut correspondre à des informations de performance, de consommation ou de surface d'un élément constitutif d'un circuit intégré. Un élément d'un circuit intégré peut être toute « brique de circuit » utilisée pour concevoir les fonctionnalités du circuit intégré. Des exemples d'éléments d'un circuit intégré sont par exemple des portes logiques, des mémoires, des processeurs, des circuits dédiés à une fonctionnalité spécifique tels que des imageurs, des afficheurs, des circuits d'émission/réception de signaux, des coprocesseurs, des routeurs, des calculateurs, des circuits de contrôle, des circuits de test, des circuits de gestion d'alimentation, etc. Ces éléments de circuit peuvent correspondre à des briques élémentaires, par exemple une porte logique OU, ou au contraire à des briques plus haut niveau telles qu'un processeur, une mémoire ou un circuit logique pouvant être fabriqué à partir des briques élémentaires.

Pour chacun de ces éléments de circuit, des informations relatives à leurs performances, à leur consommation, à leur surface, et/ou d'autres informations associées à ces éléments, telles que leur coût, leur impact environnemental, etc., peuvent être extraites d'une ou plusieurs bases de données technologiques.

La surface d'un élément de circuit pourra ainsi correspondre à une dimension surfacique en 2D, en vue de dessus (classiquement définie à partir d'une vue dite « layout » en anglais et visible à partir d'un fichier de type GDS II). Les informations de consommation énergétique d'un élément sont généralement de deux types. Le premier type correspond à des informations de consommation énergétique dynamique liée à une activité de l'élément, c'est-à-dire à la consommation énergétique liée au chargement d'état des éléments (par exemple à un accès mémoire, à la réalisation d'une image par un imageur, à la réalisation d'un calcul par un coprocesseur, etc.). Le deuxième type correspond à des informations de consommation énergétique statique d'un élément, c'est-à-dire toute information de consommation énergétique qui n'est pas relative à la consommation énergétique dynamique (comme par exemple la consommation énergétique permanente indépendante de l'activité). Il est cependant à noter que, la consommation énergétique statique peut être dépendante de l'activité de l'élément selon la prise en compte de certaines techniques de gestion de la consommation telles que la technique DVFS, ou encore la gestion du « body bias » sur du FDSOI. Les informations de performance peuvent correspondre à des informations liées à une notion temporelle, comme par exemple un temps de propagation à travers un élément de circuit pour la réalisation d'une tâche, une fréquence de fonctionnement d'un élément de circuit, un temps de latence d'une chaîne de traitement incluant au moins un élément de circuit, etc.

De telles bases de données technologiques peuvent être construites et/ou déterminées et/ou être obtenues à partir de fournisseurs (ou catalogues de fournisseurs) et/ou de fabricants de circuits intégrés. Ces bases de données peuvent également être construites, par exemple préalablement ou au cours du procédé de conception, en utilisant des outils de simulation/évaluation/synthèse à partir de données fournisseurs et/ou fabricants de plus bas niveau, par exemple à partir de kit de conception (ou *design kit* en anglais) fournis par les fabricants. Pour construire ces bases de données technologiques permettant d'obtenir des informations technologiques, un modèle architectural résultant de pré-exécution d'un outil informatique peut être utilisé. Un tel outil informatique peut être par exemple un outil de compilation d'architecture comme l'outil « Design Compiler » de Synopsys, de modèles de surface (ou taille) d'éléments constitutifs disponibles, ou encore de simulations haut niveau pré-réalisées au moyen de simulateurs dédiés comme par exemple un outil d'évaluation de consommation comme l'outil informatique Open source CACTI associé aux informations sur les mémoires caches ou l'outil informatique « PrimePower » de Synopsys. En outre, au cours du procédé de conception, ces bases de données technologiques peuvent être enrichies par au moins une partie des informations circuit déterminées et/ou raffinées à chaque itération i.

En outre, une base de données technologiques peut être adaptée pour rechercher et récupérer (via l'application de requêtes par exemple) une ou plusieurs informations technologiques à partir d'une ou plusieurs valeurs de grandeurs de sortie $R_{mg}$ issues d'au moins un des outils d'évaluation $O_m$ exécutés, et/ou d'éléments de la configuration candidate $G_{ij}$ associée.

Dans des modes de réalisation, l'étape de détermination de valeur de critère d'optimisation du circuit $C_q$ peut être effectuée en utilisant un registre de fonctions $R_{\mathcal{F}}$. Le registre de fonctions $R_{\mathcal{F}}$ est associé aux formules analytiques $\mathcal{F}$ à appliquer aux informations circuit et technologiques pour calculer une valeur de critère d'optimisation du circuit $C_q$.

En particulier, une fonction analytique $\mathcal{F}$ peut être toute fonction permettant le traitement d'informations circuit et technologique. Par exemple, une fonction analytique peut comprendre une somme de paramètres, une division, une soustraction, et/ou une multiplication, etc.

Par exemple et sans limitation, pour la détermination d'une valeur du troisième critère d'optimisation principal $C_3$ du circuit, correspondant à la surface du circuit intégré, une fonction analytique $\mathcal{F}$ peut être une somme prenant en arguments la somme de surfaces des éléments du circuit. Pour la détermination d'une valeur du deuxième critère

d'optimisation principal $C_2$ du circuit, correspondant à la consommation énergétique d'un élément de calcul du circuit intégré, une fonction analytique F peut être une multiplication prenant en arguments le nombre d'activation de chaque opération et leur consommation énergétique moyenne.

Il est à noter qu'une valeur d'un critère d'optimisation du circuit $C_q$ défini parmi l'ensemble des critères d'optimisation du circuit à déterminer peut être obtenue directement à partir de valeurs de grandeurs de sortie $R_{mg}$ après analyse d'une configuration d'architecture $G_{ij}$ par un outil d'évaluation $O_m$ choisie. L'outil d'évaluation $O_m$ peut alors utiliser pour son fonctionnement interne des bases de données technologiques. Dans ce cas, la valeur du critère d'optimisation du circuit $C_q$ n'est pas obtenue par une fonction analytique $\mathcal{F}$ exécutée après analyse par l'outil d'évaluation.

Par exemple et sans limitation, la valeur de la performance de calculs $C_1$ ou de la consommation énergétique $C_2$ peut être calculée à partir de la combinaison de résultats obtenus par outil d'évaluation (par exemple simulateur VPSim et/ou simulateur GEM5) avec des informations obtenues via l'exploitation de bases de données technologiques. En particulier, un tel outil d'évaluation délivrant un résultat dit fonctionnel tel qu'un nombre d'opérations, d'accès, de cycles, peut être configuré à partir d'une base de données technologiques, par exemple pour générer des fréquences maximales atteignables par des composants du circuit.

A l'étape 150, la sélection dans le registre de fonctions $R_{\mathcal{F}}$ de la ou des formules analytiques à appliquer est effectuée à partir du critère d'optimisation du circuit $C_q$ à déterminer.

Dans des modes de réalisation, la sélection de la ou des formules analytiques $\mathcal{F}$ à appliquer peut être en outre effectuée à partir des informations circuit $I_c$ disponibles après l'évaluation des configurations d'architecture candidates $G_{ij}$.

La valeur d'au moins un critère d'optimisation du circuit $C_q$ peut être déterminée à partir d'une fonction analytique $\mathcal{F}$ sélectionnée prenant en arguments :

- une ou plusieurs informations circuit $I_c$ obtenues à partir d'au moins un résultat d'un outil d'évaluation (et éventuellement d'informations tirées de la configuration d'architecture candidate $G_{ij}$), et

- une ou plusieurs informations technologiques $I_t$ obtenues à partir d'au moins une base de données technologiques.

Ainsi, la valeur d'un critère d'optimisation du circuit $C_q$ peut être définie selon l'équation (17) suivante :

$$C_q = \mathcal{F}(I_c, I_t) \qquad (17)$$

Par exemple et sans limitation, l'évaluation d'une configuration d'architecture candidate $G_{ij}$ par un premier outil d'évaluation $O_1$ peut générer des valeurs de grandeurs de sortie $R_{1g}$. Une information circuit $I_{c1}$ peut alors être issue des valeurs de grandeurs de sortie $R_{1g}$. La valeur d'un critère d'optimisation du circuit $C_q$ peut ainsi être déterminée à partir d'une fonction analytique $\mathcal{F}$ sélectionnée prenant en arguments l'information circuit $I_{c1}$ et une information technologique $I_{t1}$ selon l'équation (18) suivante :

$$C_q = \mathcal{F}(I_{c1}, I_{t1}) \qquad (18)$$

L'évaluation d'une configuration candidate $G_{ij}$ par un deuxième outil d'évaluation $O_2$ peut générer des valeurs de grandeurs de sortie $R_{2g}$. Une information circuit $I_{c2}$ peut alors être issue des valeurs de grandeurs de sortie $R_{2g}$. La valeur d'un critère d'optimisation du circuit $C_q$ peut ainsi être déterminée à partir de la fonction analytique $\mathcal{F}$ sélectionnée prenant en arguments l'information circuit $I_{c1}$, l'information technologique $I_{t1}$, l'information circuit $I_{c2}$ selon l'équation (19) suivante :

$$C_q = \mathcal{F}(I_{c1}, I_{t1}, I_{c2}) \qquad (19)$$

Dans des modes de réalisation, la valeur d'un critère d'optimisation du circuit $C_q$ peut être déterminée à partir de valeurs de grandeurs de sortie $R_{mg}$ issues de l'exécution combinée de deux ou plusieurs outils d'évaluation $O_m$. Par exemple et sans limitation, l'évaluation d'une configuration candidate $G_{ij}$ par un outil d'évaluation $O_4$ peut fournir les valeurs de grandeurs de sortie $R_{g4}$, elles-mêmes utilisées pour l'évaluation de la configuration candidate $G_{ij}$ par un outil d'évaluation $O_3$ fournissant en sortie les valeurs de grandeurs de sortie $R_{g3}$. Une information circuit $I_{c3}$ peut alors être issue des valeurs de grandeurs de sortie $R_{g3}$. Une information technologique $I_{t3}$ peut également être issue des valeurs de grandeurs de sortie $R_{g3}$ et/ou $R_{g4}$, et/ou des éléments de la configuration d'architecture candidate $G_{ij}$. La valeur d'un critère d'optimisation du circuit $C_q$ peut ainsi être déterminée à partir d'une fonction analytique $\mathcal{F}$ sélectionnée prenant en arguments l'information circuit $I_{c3}$ et l'information technologique $I_{t3}$, selon l'équation (20) suivante :

$$C_q = \mathcal{F}\,(I_{c3},\,I_{t3}) \qquad (20)$$

Il est à noter que les différents modes de réalisation pour déterminer la valeur d'un critère d'optimisation du circuit $C_q$ peuvent être mis en oeuvre séparément ou être combinés.

La valeur du premier critère d'optimisation principal de performance de calculs $C_1$ du circuit (par exemple la latence globale d'une chaîne de traitement) peut être par exemple calculée en appliquant une fonction analytique $\mathcal{F}$ sélectionnée prenant en arguments une pluralité d'informations de latence obtenues via l'exécution de simulateurs (par exemple VPSim et/ou GEM5) et l'exploitation de la base de données technologique.

La valeur du deuxième critère d'optimisation principal $C_2$ de consommation énergétique du circuit peut être par exemple calculée en appliquant une fonction analytique $\mathcal{F}$ sélectionnée prenant en arguments une liste d'éléments du circuit intégré et les consommations énergétiques associées de ces différents éléments accessibles depuis une base de données existante ou, s'ils ne sont pas accessibles depuis une base de données existante, en générant/alimentant une telle base de données à partir de résultats de simulations de consommation permettant d'obtenir ces informations technologiques. Il est généralement possible d'avoir une fonction analytique F qui prenne comme argument le nombre d'accès à l'interconnexion entre les éléments constitutifs du circuit ou d'une de ces parties ou le nombre d'accès mémoire (obtenus via par exemple le simulateur VPSim), avec la consommation énergétique par accès obtenue via l'exploitation de la base de données technologique (base construite par exemple avec l'outil CACTI).

La valeur du troisième critère d'optimisation principal $C_3$ de surface du circuit peut être par exemple calculée en appliquant une fonction analytique $\mathcal{F}$ sélectionnée. Une telle fonction analytique $\mathcal{F}$ prend en arguments des paramètres provenant de la configuration d'architecture à évaluer (par exemple, le nombre et la configuration des coeurs de processeurs, des mémoires cache), ainsi que des résultats provenant d'outils d'évaluation (par exemple, la surface d'une mémoire cache obtenue par exemple via l'outil CACTI), et des résultats obtenus via l'exploitation de bases de données technologiques (par exemple une base déterminée à partir d'un modèle pour obtenir la taille des microprocesseurs, souvent exprimée en mm$^2$). Il est à noter que l'outil CACTI s'appuie lui-même sur des bases de données technologiques. Une telle fonction analytique $\mathcal{F}$ peut également prendre en arguments des résultats d'un rapport de synthèse (par exemple issu de l'outil « Design Compiler » pour une description de l'architecture bas niveau).

Ainsi, la valeur du troisième critère d'optimisation principal $C_3$ de surface du circuit peut être par exemple calculée en appliquant une fonction analytique $\mathcal{F}$ définie selon l'expression suivante :

$\mathcal{F}$ = ('Nombres de cœurs' × 'surface d'un cœur') + ('nombres de mémoires cache' × 'surface d'une mémoire cache') + 'surface du reste'.

Dans l'expression précédente, les arguments associés au terme « nombres de » font référence à des paramètres provenant de la configuration d'architecture à évaluer obtenue par l'application de l'algorithme A. Egalement dans l'expression précédente, l'argument « surface du reste » fait référence au résultat de l'addition des surfaces des composants élémentaires du circuit intégré autre que les coeurs ou mémoires cache (c'est-à-dire les interconnexions, les périphériques, etc.).

Dans des modes de réalisation, les résultats d'évaluation générés par la pluralité d'outils d'évaluation $O_m$ et/ou les valeurs de critères d'optimisation du circuit $C_q$ associés à chaque configuration d'architecture candidate $G_{ij}$ peuvent être enregistrés dans une mémoire de données de configurations candidates. Par exemple et sans limitation, si dans une itération courante des étapes d'optimisation du procédé, il est déterminé qu'une configuration d'architecture candidate $G_{ij}$ est identique à une configuration d'architecture $G_{ij}$ préalablement déterminée dans une itération précédente, l'étape d'optimisation 140 du procédé peut être mise en oeuvre en utilisant les données stockées dans la mémoire de données de configurations candidates, en relation avec la configuration d'architecture $G_{ij}$ préalablement déterminée à l'itération précédente (et notamment des valeurs de critères d'optimisation du circuit $C_q$ préalablement calculées en association avec la configuration).

A l'étape 160, il est déterminé si un critère d'arrêt de la pluralité d'itérations d'étapes d'optimisation est satisfait.

Dans des modes de réalisation, le critère d'arrêt peut être relatif à l'évaluation d'une ou plusieurs fonctions objectifs $F_h$ définis dans l'espace d'exploration E d'architecture par rapport aux valeurs de critères d'optimisation du circuit $C_q$ déterminées.

Dans des modes de réalisation, le critère d'arrêt peut être défini en fonction d'un temps prédéfini d'exécution de la pluralité d'itérations d'étapes d'optimisation et/ou d'un nombre d'itérations exécutées. Par exemple, il peut être déterminé que le critère d'arrêt est satisfait si le temps prédéfini d'exécution a expiré.

S'il est déterminé que le critère d'arrêt n'est pas satisfait à l'étape 160, une nouvelle itération des étapes d'optimisation 130 à 150 est mise en oeuvre.

S'il est déterminé que le critère d'arrêt est satisfait à l'étape 160, les itérations des étapes d'optimisation 130 à 150 sont arrêtées et l'étape 170 est exécutée.

A l'étape 170, une ou plusieurs configurations optimisées d'architecture de calcul $G_{opt}$ sont générées. Une configuration optimisée $G_{opt}$ est générée à l'étape 170, à partir des configurations d'architecture candidates $G_{ij}$ déterminées à l'étape 130 d'au moins une des itérations i exécutées des étapes d'optimisation du procédé et des valeurs de critères d'optimisation du circuit $C_q$ déterminées à l'étape 150 de la dernière itération des étapes d'optimisation 130 à 150.

L'étape 170 permet une génération des configurations optimisées en architecture matérielle de circuit numérique multi-niveaux, automatiquement (170).

Avantageusement, à la première itération des étapes d'optimisation 130 à 150, une configuration d'architecture candidate $G_{ij}$ déterminée à l'étape d'optimisation 130 peut être une configuration d'architecture $G_i$ dite 'configuration d'architecture d'initialisation'. Dans la deuxième itération des étapes d'optimisation 130 à 150, à l'étape 130, l'algorithme A d'optimisation est appliqué de manière à générer une ou plusieurs configurations d'architecture candidates $G_{ij}$ à partir de l'espace d'exploration E d'architecture, de la configuration d'architecture d'initialisation $G_i$ et des valeurs de critères d'optimisation du circuit $C_q$ déterminées (c'est-à-dire par exemple en fonction des résultats d'évaluation de la configuration d'architecture initiale générés par la pluralité d'outils d'évaluation $O_m$). Dans les itérations suivantes des étapes d'optimisation 130 à 150, à la première étape d'optimisation 130, l'algorithme A d'optimisation est appliqué de manière à générer une ou plusieurs configurations d'architecture candidate $G_{ij}$ à partir de l'espace d'exploration E d'architecture, de configurations d'architecture $G_{ij}$ générées à une itération précédente des étapes d'optimisation 130 à 150 (par exemple, la configuration d'architecture d'initialisation $G_i$) et des valeurs de critères d'optimisation du circuit $C_q$ déterminées.

Par exemple et sans limitation, l'étape 130 d'une itération courante des étapes d'optimisation peut comprendre des opérations de modifications des éléments de la matrice de paramètres (par exemple 'nombre de coeurs', sous-paramètres du NoC, etc.) de la configuration d'architecture d'initialisation $G_i$ et/ou de la configuration d'architecture $G_{ij}$ de l'itération précédente. Ces opérations de modification peuvent être appliquées dans un voisinage variable et/ou prédéfini des éléments de la matrice de paramètres. Ces opérations de modification peuvent être déterminées à partir de l'évaluation d'un ou de plusieurs critères d'optimisation $C_h$ définis dans l'espace d'exploration E d'architecture par rapport aux valeurs de critères d'optimisation du circuit $C_q$ déterminées. En outre, l'exploration de conception d'architectures matérielles étant généralement une exploration multi-critères, les opérations de modification peuvent être déterminées en utilisant une comparaison entre différentes évaluations de critères d'optimisation $C_h$, ce qui permet d'effectuer une génération dynamique de front de Pareto (appelé également optimum de Pareto) utilisé généralement dans le cadre du domaine de la recherche opérationnelle.

Dans un exemple de réalisation, un critère d'optimisation du circuit peut être la performance de calculs $C_1$ et une fonction objectif peut être la fonction d'argument maximum de la performance de calculs du circuit intégré $F_1 = $ Argmax $(C_1)$. Dans un mode de réalisation, l'étape d'optimisation 130 peut comprendre la comparaison de la valeur du critère d'optimisation du circuit $C_1$ sur un certain nombre d'itérations successives associées à des configurations d'architecture $G_{ij}$ modifiées, de manière à évaluer si la performance de calculs augmente et donc si la fonction objectif $F_1$ associé à la fonction d'argument maximum de la performance de calculs est vérifié.

Dans des modes de réalisation, le procédé de conception d'architectures matérielles de circuit intégré selon les modes de réalisation peut comprendre une étape de tri et/ou de classement des configurations d'architecture candidates $G_{ij}$ (déterminées dans une ou plusieurs itérations des étapes d'optimisation 130 à 150). L'étape de tri peut être effectuée (ou exécutée) en fonction de la ou des valeurs de critères d'optimisation du circuit $C_q$ déterminées et/ou de l'évaluation d'une ou de plusieurs fonctions objectifs et/ou de contraintes $F_h$ définies dans l'espace d'exploration E d'architecture par rapport aux valeurs de critères d'optimisation du circuit $C_q$ déterminées.

En outre, l'étape de tri peut être effectuée de manière à garder les configurations d'architecture $G_{ij}$ dite 'dominantes'. Une configuration d'architecture dominante $G_d$ fait référence à une configuration d'architecture définie par rapport à au moins une configuration d'architecture annexe $G_a$. Les configurations d'architecture dominante $G_d$ et les configurations d'architecture annexe $G_a$ sont évaluées au cours d'une même itération d'optimisation ou de deux différentes itérations d'optimisation. Une configuration d'architecture dominante $G_d$ présente des résultats d'évaluation de configuration induisant une meilleure évaluation sur l'ensemble des fonctions objectifs et/ou de contraintes $F_h$ par rapport à l'évaluation sur l'ensemble des fonctions objectifs et/ou de contraintes $F_h$ induite par les résultats d'évaluation de configuration issus d'une configuration d'architecture annexe $G_a$.

L'étape de classement peut être effectuée de manière à ordonner les configurations d'architecture $G_{ij}$ en fonction de l'évaluation d'une ou de plusieurs fonctions objectifs et/ou de contraintes $F_h$ définis dans l'espace d'exploration E d'architecture par rapport aux valeurs de critères d'optimisation du circuit $C_q$ déterminées associées à ces configurations.

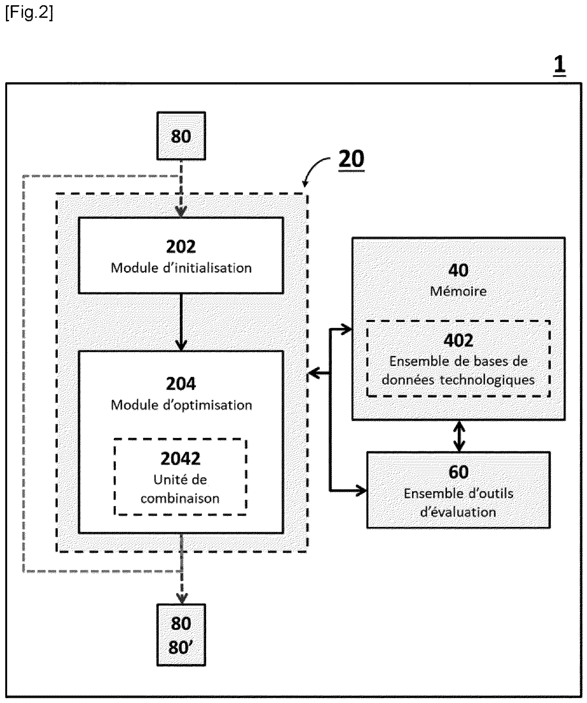

La figure 2 représente un exemple de système 1 de conception d'architecture matérielle d'un circuit intégré dans lequel peut être mis en oeuvre le procédé de conception d'architectures matérielles de circuit intégré.

Le système 1 de conception d'architecture matérielle d'un circuit intégré comprend un dispositif 20 de détermination d'architecture matérielle et une mémoire 40. Le dispositif 20 peut comprendre un module d'initialisation 202 configuré pour générer un espace d'exploration E d'architecture, par exemple à partir du descripteur D d'architecture, et un module d'optimisation 204 configuré pour mettre en oeuvre le procédé de conception d'architectures matérielles de circuit intégré.

Dans des modes de réalisation, la mémoire 40 peut comprendre le registre d'algorithmes $R_A$ associé aux algorithmes d'optimisation utilisé pour sélection un algorithme A à l'étape 130.

Tel que représenté sur la figure 2, le système 1 peut comprendre un ensemble 60 d'outils d'évaluation $O_m$ disponibles. Le module d'optimisation 204 peut être configuré pour sélectionner un ou plusieurs outils d'évaluation $O_m$ parmi l'ensemble d'outils d'évaluation $O_m$ disponibles pour générer la matrice de paramètres de configuration d'architecture $G_{ij}$ à l'étape 140.

Dans des modes de réalisation, le module d'optimisation 204 peut également être configuré pour déterminer les liens d'exécution entre un outil d'évaluation $O_m$ sélectionné et un autre outil d'évaluation $O_m$ sélectionné ou disponible.

Dans des modes de réalisation, la mémoire 40 peut également comprendre le premier registre de traduction $R_{T1}$ associé à un ou plusieurs outils d'évaluation $O_m$ qui peut être utilisé par le module d'optimisation 204 pour sélectionner les éléments de transcription associés aux outils d'évaluation $O_m$ à l'étape 140.

Dans des modes de réalisation, le module d'optimisation 204 peut également comprendre une unité de combinaison 2042 configurée pour calculer des valeurs de critères d'optimisation du circuit $C_q$ à l'étape 150.

Selon certains modes de réalisation, la mémoire 40 peut également comprendre l'ensemble de bases des données technologiques 402 et le registre de fonction $R_F$ utilisés par l'unité de combinaison 2042 pour calculer des valeurs de critères d'optimisation du circuit $C_q$ à l'étape 150.

En particulier, une base de données technologique peut comprendre une pluralité de bases de données de natures différentes. De telles bases de données peuvent comprendre des données textuelles ou numériques. De telles bases de données peuvent être des bases de données dites de conception utilisables par différents outils de conception d'un circuit numérique et présentant différents formats associés à ces outils. De telles bases de données peuvent également comprendre, pour différentes briques de circuit (mémoire, processeur, portes logiques, fonctions logiques) associées à une base de données de conception, des fichiers de type TLM (ou *Transaction Level Model* en anglais), des fichiers RTL, des fichiers de « layout » (ou disposition) fournissant des représentations de masques pour une fabrication selon une technologie données, un kit de conception de processus (ou PDK pour *Process Design Kit* en anglais) comprenant des fichiers fournissant des délais de temps de propagation, des fichiers fournissant un modèle de comportement physique, etc. De tels fichiers peuvent être de format « .db » ou de format « .lib » par exemple.

La mémoire 40 peut en outre comprendre la mémoire de données de configuration candidate configurée pour enregistrer les résultats d'évaluation générés par la pluralité d'outils d'évaluation $O_m$ exécuté et/ou les valeurs de critères d'optimisation du circuit $C_q$ associés à chaque configuration d'architecture candidates G.

L'utilisation d'une mémoire de données de configuration candidate permet d'accélérer l'exploration des différentes configurations d'architecture $G_{ij}$ établies (à évaluer) pour générer un circuit intégré optimisé.

Dans des modes de réalisation, le système 1 peut comprendre une ou plusieurs interfaces d'entrée/sortie de données, telles que des interfaces homme-machine 80 (IHM). Ces interfaces homme-machine peuvent comprendre un ou plusieurs moyens d'acquisition ou de moyens de transmission d'informations, tels que des dispositifs de saisie et de commande (par exemple microphone, haut-parleur, clavier) et/ou un ou plusieurs dispositifs d'affichage (par exemple écran vidéo, écran tactile, etc.). Par exemple et sans limitation, le système 1 peut comprendre une interface homme-machine 80 configuré pour acquérir un descripteur D d'architecture fourni par un utilisateur du système 1 sous la forme d'un modèle ('*template*') d'architecture de calculs.

Dans des modes de réalisation, la mémoire 40 peut comprendre un deuxième registre de traduction $R_{T2}$ associé à un ou plusieurs modèles ('*templates*') d'architecture de calculs et le module d'initialisation 202 peut être configuré pour sélectionner un modèle d'architecture de calculs parmi les *templates* du registre $R_{T2}$. La sélection du *template* d'architecture de calculs peut être effectuée en fonction du descripteur D d'architecture. Le module d'initialisation 202 peut ainsi être configuré pour générer les éléments P, L et F de l'espace d'exploration E d'architecture à partir du descripteur D d'architecture et du *template* sélectionné du deuxième registre de traduction $R_{T2}$.

Dans des modes de réalisation, le système 1 peut comprendre un outil de transformation 80' configuré pour transformer la configuration optimisée $G_{opt}$ en fichier de description d'une architecture matérielle (encore appelé 'fichier de description matérielle') au niveau RTL définissant le comportement d'un circuit et directement convertible en portes logiques combinatoires et en éléments séquentiels (bascules, etc...). Une description d'une architecture matérielle au niveau RTL, dite bas niveau, peut par exemple être définie dans un langage de description matérielle HDL (*Hardware Description Langage*) tels que Verilog ou VHDL.

Dans des modes de réalisation, le module d'initialisation 202 peut être configuré pour recevoir une ou plusieurs configurations optimisées $G_{opt}$ et générer un espace d'exploration E d'architecture à partir du ou des configurations optimisées $G_{opt}$ similairement à la génération de l'espace d'exploration E d'architecture à partir du descripteur D d'architecture.

Dans des modes de réalisation, la mémoire 40 peut comprendre un registre de données $R_D$ associé à des paramètres à optimiser du circuit intégré à concevoir et le module d'initialisation 202 peut ainsi être configuré pour générer les éléments P, L et F de l'espace d'exploration E d'architecture à partir du descripteur D d'architecture ou de configurations optimisées $G_{opt}$, et d'une partie ou de l'ensemble des paramètres du registre de données $R_D$.

L'exploitation de configurations optimisées $G_{opt}$ pré-générées par des séries d'itérations d'étapes d'optimisation en mettant en oeuvre le procédé de détermination d'architecture matérielle, selon les modes de réalisation de l'invention, permet une gestion multi-niveaux de la conception d'architectures matérielles de circuit intégré. Dans ce cas, l'ensemble 60 du système 1 de conception peut comprendre des outils d'évaluation exploitables en fonction de différents niveaux de description de configurations d'architecture ou d'un ou plusieurs éléments constitutifs d'une configuration d'architecture. Dans un tel mode de réalisation, l'ensemble des registres de traduction, de données et d'algorithmes d'optimisation peut être adapté aux outils d'évaluation et à chacun des différents niveaux de description de configurations d'architecture exploitables par les outils d'évaluation. De la même manière, l'ensemble des bases de données technologiques 402 peut comprendre des bases de données adaptées aux différents niveaux de description de configurations d'architecture. Avantageusement, certains outils d'évaluation et certaines bases de données technologiques peuvent être respectivement exploitables et utilisées sur une multitude de niveau de conception d'architectures matérielles.

L'homme du métier comprendra que l'invention peut être mise en oeuvre par ordinateur, en particulier en tant que programme d'ordinateur comportant des instructions pour son exécution. Le programme d'ordinateur peut être enregistré sur un support d'enregistrement lisible par un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués ("Cloud computing"), éventuellement selon des technologies de pair-à-pair.

Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Le procédé de détermination d'architectures matérielles peut être implémenté sur une unité de calcul distribué comprenant une pluralité de coeurs physiques. Les modes de réalisation de l'invention sont particulièrement adaptés à une telle implémentation distribuée ainsi qu'à un portage sur des technologies hardware multi-coeur. Le procédé de détermination d'architectures matérielles selon les modes de réalisation de l'invention peut être est implémenté en code informatique (pouvant notamment consister en un langage d'abstraction de matériel) dans différents langages, tels que le langage C++, Python, Chisel, pyMTL, spinal-HDL, etc.

L'invention n'est pas limitée aux modes de réalisation et aux exemples décrits ci-avant à titre d'exemple non limitatif. L'invention englobe toutes les variantes de réalisation qui pourront être envisagées par l'homme du métier.

**Revendications**

1. Procédé de détermination, mis en oeuvre par ordinateur, d'une architecture matérielle d'un circuit intégré, **caractérisé en ce que** le procédé comprend au moins une pluralité d'itérations des étapes suivantes consistant à :

   - appliquer (130) un algorithme d'optimisation A à un espace d'exploration d'architecture E, de manière à déterminer au moins une configuration d'architecture candidate G, ladite configuration d'architecture candidate G appartenant audit espace d'exploration d'architecture E, ledit espace d'exploration d'architecture E comprenant un ensemble de fonctions objectifs F évaluant des critères d'optimisation $C_q$ associés à ladite configuration d'architecture candidate G ;
   - appliquer ladite configuration d'architecture candidate G (140) à une pluralité d'outils d'évaluation $O_m$, ce qui fournit des résultats d'évaluation des configurations d'architectures candidates G, un outil d'évaluation étant un outil informatique adapté pour analyser une configuration d'architecture en réponse à des valeurs de grandeurs d'entrée associées à la configuration d'architecture ;
   - déterminer (150) une valeur d'au moins deux critères d'optimisation $C_q$ desdits critères d'optimisation $C_q$, lesdits au moins deux critères d'optimisation dits principaux étant choisis parmi la performance de calculs, la consommation énergétique et/ou la surface dudit circuit intégré à concevoir, la valeur d'un desdits critères d'optimisation principaux étant déterminée en appliquant une fonction analytique $\mathcal{F}$ prenant en arguments au moins une information circuit et au moins une information technologique, une information circuit étant une information liée à la structure du circuit intégré et/ou une information liée à l'activité de fonctionnement du circuit intégré, et une information technologique étant déterminée à partir d'une ou plusieurs bases de données technologiques, ladite au moins une information circuit étant déterminée à partir des résultats d'évaluation fournis par au moins un outil d'évaluation $O_m$ parmi lesdits outils d'évaluation $O_m$, ladite au moins une information technologique étant issue d'au moins une base de données technologique ; et
   - déterminer si (160) un critère d'arrêt est vérifié ;
   et **en ce que**, à chaque itération, la détermination de ladite configuration d'architecture candidate G est optimisée à partir de l'évaluation des fonctions objectifs F relatives auxdites valeurs déterminées desdites au moins deux critères d'optimisation principaux $C_q$ ;
   le procédé comprenant en outre un arrêt desdites itérations en réponse à la vérification dudit critère d'arrêt et une génération d'au moins une configuration optimisée d'architecture de calcul $G_{opt}$ à partir de ladite au moins une configuration d'architecture G,
   ledit procédé étant applicable à différents niveaux dans l'architecture du circuit intégré.

2. Procédé selon la revendication 1, dans lequel ledit critère d'arrêt est défini en fonction d'une évaluation d'au moins une fonction objectifs $F_h$ relative à un critère d'optimisation principal $C_q$, à partir de la valeur déterminée dudit critère d'optimisation principal.

3. Procédé selon la revendication 1, dans lequel ledit critère d'arrêt est défini en fonction d'un temps prédéfini d'exécution de ladite pluralité d'itérations d'étapes d'optimisation.

4. Procédé selon l'une des revendications 1 à 3, dans lequel chaque outil d'évaluation $O_m$ est configuré pour générer un ensemble de résultats d'évaluation $R_{mg}$ associés à ladite au moins une configuration d'architecture G, et dans lequel le procédé comprend en outre une étape consistant à appliquer ladite configuration d'architecture candidate G (140) à un premier outil d'évaluation $O_m$ parmi lesdits outils d'évaluation $O_m$, à partir d'au moins un résultat d'évaluation $R_{mg}$ issu d'une étape préalable d'application de ladite configuration d'architecture candidate G (140) à un deuxième outil d'évaluation $O_m$ parmi lesdits outils d'évaluation $O_m$.

5. Procédé selon l'une des revendications 1 à 4, dans lequel la génération de ladite au moins une configuration d'architecture G est effectuée en fonction de ladite pluralité d'outils d'évaluation $O_m$ utilisables.

6. Procédé selon l'une des revendications 1 à 5, dans lequel le procédé comprend en outre une étape préalable de réception (110) d'un descripteur D d'architecture et une étape de génération (120) dudit espace d'exploration E d'architecture à partir dudit descripteur D d'architecture et dudit algorithme d'optimisation A.

7. Procédé selon l'une des revendications 1 à 6, dans lequel un outil d'évaluation $O_m$ de ladite pluralité d'outils d'évaluation $O_m$ est un outil d'évaluation choisi parmi un simulateur de configuration d'architecture, un outil de compilation d'architecture, un outil d'évaluation de consommation, un outil basé sur une exploitation d'une base de données et un outil basé sur une exploitation d'une mémoire de données de configurations candidates, ladite mémoire de données de configurations candidates étant utilisée pour sauvegarder des résultats d'évaluation issus de l'étape (140) d'application de configurations d'architecture candidates G et/ou de l'étape (150) de détermination de valeur de de critères d'optimisation $C_q$ de configurations d'architecture candidates G.

8. Procédé selon l'une des revendications précédentes, dans lequel ladite pluralité d'outils d'évaluation comprend des outils d'évaluation exploitables en fonction de différents niveaux de description de configurations d'architecture ou d'un ou plusieurs éléments constitutifs d'une configuration d'architecture.

9. Architecture matérielle de circuit intégré obtenue par la mise en oeuvre du procédé selon l'une des revendications 1 à 8.

10. Procédé de conception d'un circuit intégré comprenant une implémentation d'un circuit intégré à partir de l'architecture matérielle de circuit intégré de la revendication 9.

11. Produit programme d'ordinateur comportant des instructions de code de programmation aptes à être mises en oeuvre par un ordinateur, l'ordinateur étant apte à mettre en oeuvre le procédé selon l'une quelconque des revendications 1 à 8.

[Fig.1]

```
┌ ─ ─ ─ ─ ─ ─ ─ ─ ─ ─ ─ ─ ─ ─ ─ ─ ─ ┐        110
│   Réception d'un descripteur D d'architecture  │
│              de calcul                │
└ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ┐        120
│     Détermination de l'espace d'exploration E    │
│    d'architecture à partir du descripteur D     │
│              d'architecture             │
└ ─ ─ ─ ─ ─ ─ ─ ─ ─ ─ ─ ─ ─ ─ ─ ─ ─ ┘
```

Registre d'algorithmes

**130**
Détermination de configurations G à évaluer à partir de l'espace d'exploration E

Outils d'évaluation

**140**
Exécution des outils d'évaluation des configurations G à évaluer

Bases de données tech.

**150**
Calculer les valeurs de critères d'optimisation du circuit à partir des résultats d'évaluation

Registre de fonctions

**160** Critère d'arrêt — **non**

**oui**

**170**
Générer les configurations optimisées $G_{opt}$

[Fig.2]

Europäisches
Patentamt

European
Patent Office

Office européen
des brevets

**RAPPORT DE RECHERCHE EUROPEENNE**

Numéro de la demande

EP 24 16 8802

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DOS SANTOS MARCUS V D ET AL: "A MPSoC cache design space exploration approach based on ABC algorithm to optimize energy consumption and performance", PROCEEDINGS OF THE IEEE 27TH INTERNATIONAL CONFERENCE ON APPLICATION-SPECIFIC SYSTEMS, ARCHITECTURES AND PROCESSORS, 6 juillet 2016 (2016-07-06), pages 153-158, XP033014133, DOI: 10.1109/ASAP.2016.7760785 * le document en entier * * abrégé * * algorithme 1 * * algorithme 2, ligne 36 * * section III, paragraphe 1 * * section III.D * * section III.E * * section IV.A * ----- | 1-11 | INV. G06F30/36 G06F30/39 ADD. G06F111/06 G06F111/20 G06F115/02 |
| A | JOSEFA D\'IAZ \'ALVAREZ ET AL: "Multi-objective optimization of energy consumption and execution time in a single level cache memory for embedded systems", ARXIV.ORG, 22 février 2023 (2023-02-22), XP091444086, DOI: 10.1016/J.JSS.2015.10.012 * le document en entier * * abrégé * * section 3 * * figure 1 * * figure 5 * * section 4 * ----- -/-- | 1-11 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| Munich | 3 septembre 2024 | Rungger, Matthias |

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 24 16 8802

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SHAO YAKUN SOPHIA ET AL: "Aladdin: A pre-RTL, power-performance accelerator simulator enabling large design space exploration of customized architectures", PROCEEDINGS OF THE ACM/IEEE 41ST INTERNATIONAL SYMPOSIUM ON COMPUTER ARCHITECTURE, 14 juin 2014 (2014-06-14), pages 97-108, XP032619365, DOI: 10.1109/ISCA.2014.6853196 * le document en entier * * abrégé * * figures 1,2 * * tableau 1 * * section 5 * ----- | 1-11 | |
| A | ABEL G SILVA-FILHO ET AL: "An Intelligent Mechanism to Explore a Two-Level Cache Hierarchy Considering Energy Consumption and Time Performance", PROCEEDINGS OF THE 19TH INTERNATIONAL SYMPOSIUM ON COMPUTER ARCHITECTURE AND HIGH PERFORMANCE COMPUTING, 1 octobre 2007 (2007-10-01), pages 177-184, XP031161524, * le document en entier * * abrégé * * section 3 * * figure 2 * * tableau 1 * ----- | 1-11 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 3 septembre 2024 | Rungger, Matthias |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **H. CALBOREAN et al.** An Automatic Design Space Exploration Framework for Multicore Architecture Optimizations. *9th RoEduNet,* 2010, vol. 14

- **L. ZAOURAR et al.** Multilevel simulation-based co-design of next génération HPC microprocessors. *International Workshop PMPBS (PMBS), Super Computing, St. Louis, United States,* 2021